# EUROPEAN PATENT APPLICATION

(11) **EP 3 348 828 A1**
(43) Date of publication of application: **18.07.2018**
(21) Application number: 16836697.9
(22) Date of filing: 28.07.2016
(51) Int. Cl.: F03G 3/00, F03G 7/10

(54) **CIRCULAR MOTION - POTENTIAL ENERGY CONVERTER**

(30) Priority: 19.08.2015 ES 201500660
(71) Applicant: Morales Contreras, Juan, 11630 Arcos De La Frontera (Cádiz) (ES)
(72) Inventor: Morales Contreras, Juan, 11630 Arcos De La Frontera (Cádiz) (ES)
(74) Representative: Evens, Paul Jonathan
(86) International application number: PCT/ES2016/070577
(87) International publication number: WO 2017/029423

(57) **Abstract**

The invention relates to a circular motion-potential energy converter. It comprises a platform (1) with an opening (16) for coupling the machine that carries said platform (1). The platform is supported by support elements (2, 3, 2a, 3a), and diametrically opposing and radial guides (4, 5, 4a, 5a) are arranged between each pair of supports (2, 3 and 2a, 3a). Objects (6, 6a) slide along said guides (4, 5, 4a, 5a), and an end of a laterally - not longitudinally - flexible tether (7, 7a) is fastened to the centre of mass of each of said objects (6, 6a). The free end of each tether (7, 7a) is fastened at points (10, 10a) which must be equidistant to the centre of rotation of the platform (1) and diametrically opposite, such that the force exerted by the objects (6, 6a) is lifted on the points (10, 10a) and limits the radius of rotation of the objects (6, 6a). A part (11) with two bolts (12, 12a) is arranged on the same shaft but not secured thereto, for the transmission of power towards the outside. The approximate gain of said converter is **1 - 4.81.**

## Description

### Sector of the art

The sector of the art to which this invention belongs is the energy sector, specifically that of energy converters.

The main objective of this system is to exploit or use the potential energy that exists in the circular movement of any object, which has not been used until now.

### Indication of the state of the art

In the treatises on physics that have been observed and in the many investigations carried out, only one type of energy has been and is considered in the circular movement of an object around a shaft: the rotational or kinetic energy acquired by said object, as a function of the angular velocity and the radius with which this object rotates.

In circular movement, this object acquires another form of energy in addition to the rotational or kinetic energy considered, as a function of the place it occupies within the system it forms part of: **potential energy,** which has the potential or capacity either to be converted into kinetic energy or to do work. It is therefore **"useful".**

Treatises on physics state: The term **potential energy** means that the object has **the potential or capacity** either to gain **kinetic energy** or to do work when it is released from some point of a system in which there is **a conservative force.** Central forces are conservative. The **centripetal force** that gives rise to circular movement is a **central force,** and therefore a **conservative** one.

### Explanation of the invention

The circular movement of an object may be analysed as a linear movement that changes the direction of its displacement at each instant. This change in the direction of displacement is caused by the connection existing between the object and the centre of rotation, this connection being supported by the centripetal force which gives rise to the circular movement.

In the circular displacement being analysed, an acceleration of two types can be introduced to the velocity vector, one varying the modulus thereof and the other varying its direction. This acceleration has the same name as the force that gives rise to it, **centripetal acceleration,** and its value is **a_{c} = v²/r.**

According to the mathematical principle of Newton's second law, **F = ma,** since centripetal acceleration **a_{c} = v²/r,** then **F_{c} = mv²/r.**

In accordance with Newton's third law or the **action-reaction** principle, forces go in pairs: for every **"action"** force, there is another, **"reaction"** force with equal magnitude but in the opposite direction.

In order for an object to define a circular movement, there must be a force which gives rise to this. This is the **centripetal** force, a real force which produces an effect on the object to which it is applied: the change in its direction. This is the **"action"** force and it is directed towards the centre of rotation. The object opposes this change in its direction with another force of equal magnitude but in the opposite direction; this is the **"reaction"** force and it is called **centrifugal** force. It has the same magnitude as the centripetal force but is in the opposite direction, thus directed towards the outside of the system.

In the circular movement being analysed, the object is assigned a mass of **0.022 kg** and a radius of **0.040 m,** and is rotating at a velocity of **35 rps.** In this case, the value of the centripetal force **F_{c}** is **42.5579 N.** Therefore, the magnitude of the centrifugal force is also **42.5579 N** but it is in the opposite direction, that is, it is directed towards the outside of the system.

Newton's second law states that **F = ma,** and thus **a = F/m,** but also **a** = **Δv/Δt** and therefore **Δv** = **aΔt.**

With regard to the circular movement of the object, said object continues in its circular movement while the centripetal force is acting on it, that is, while it remains connected to the centre of rotation. During this time, the **centripetal force** is real and the centrifugal force is an **inertial or fictitious force;** it produces no effect on the object to which it is being applied.

If at a given moment the connection between the object and the centre of rotation is broken, **in this same instant and not before** the centrifugal force becomes real and causes the object to travel in a straight line, starting from the tangent at the instant at which the connection is broken, at a given velocity (disregarding friction) which lasts for a time. The velocity will be proportional to the centrifugal force that gives rise to the displacement. During this time, the object acquires kinetic energy as a function of the velocity at which it travels, which it has in the form of **potential energy** while there is circular movement.

Let us calculate the velocity at which the object travels during a time **t = 0.5 s.** Given that the **action (centripetal) force** is the same as the **reaction (centrifugal) force,** the magnitude of the **centrifugal force is 42.5579 N.** Thus, **a** = **F/m** = **42.5579/0.022** = **1934.45 m/s².**

Before the connection with the centre of rotation is broken, the object travels at a linear velocity which is **2π x r x 35** = **8.7965 m/s.** The variation in the velocity **Δv** = **v_{f}** - **vᵢ.** The variation in the time is **t = t_{f} - tᵢ.** As **tᵢ = 0 and tᵢ = 0.5 s,** the variation is **At = 0.5 s.** The variation in the velocity is **Δv** = **aΔt** = **967.225 m.** Therefore in a time **t = 0.5 s,** the object travels **v_{f} - vᵢ** (friction is disregarded) **967.225** - **8.7965** = **958.4285 m.** Given that **t = 0.5 s,** the object travels at an average velocity of **1916.857 m/s.**

The kinetic energy acquired by an object that travels at a given velocity is **E_{c}** = **½mv²** = **40417.75 J,** which was in the object before the object-centre of rotation connection was broken, but in the form of **potential energy.**

The rotational or kinetic energy of an object is **½Iw², I** being the moment of inertia of the object and rho the angular velocity at which it travels. Thus **Eᵣ** = **1.7023 J.** The mechanical energy of a system **Eₘ** is equal to the sum of the **rotational or kinetic energy Eᵣ** and **the potential energy Eₚ.**

In the real tests mentioned, there are two objects and they are diametrically opposite, in such a way that the system is more or less balanced. Thus the rotational energy is **Eᵣ x 2 = 3.4046 J,** and the same for the potential energy, that is, **Eₚ x 2 = 80835.5 J,** the mechanical energy of the system being **Eₘ** = **80838.9046 J.**

In the tests explained, a direct-current electric motor is used to move the system; to make it rotate at **35 rps,** pulling the described system and a dynamic load, it is supplied with a voltage of **5.70 Vcc,** with a current consumption of **0.69 amps,** therefore a power of **3.933 w o J/s.** In one hour, this amounts to an energy transfer of **14158.8 J,** with a constant power of **3.933 w o J/s.**

Depending on the manufacturer, the motor that moves the system develops a torque of **0.0179 Nm** in the shaft. With the noted magnitude of the centrifugal force and the quantity of potential energy in the objects, a torque of - **r= F x d = 42.5579 x 0.02** = **0.8511 Nm** (47.54 times greater) can be generated (in the example).

The accompanying drawings on subsequent pages show the shapes and locations of the parts comprising this system.

### Description of the figures

Figure 1: full side view of the converter (including the motor).
Figure 2: full top view of the converter.

### Description of an embodiment

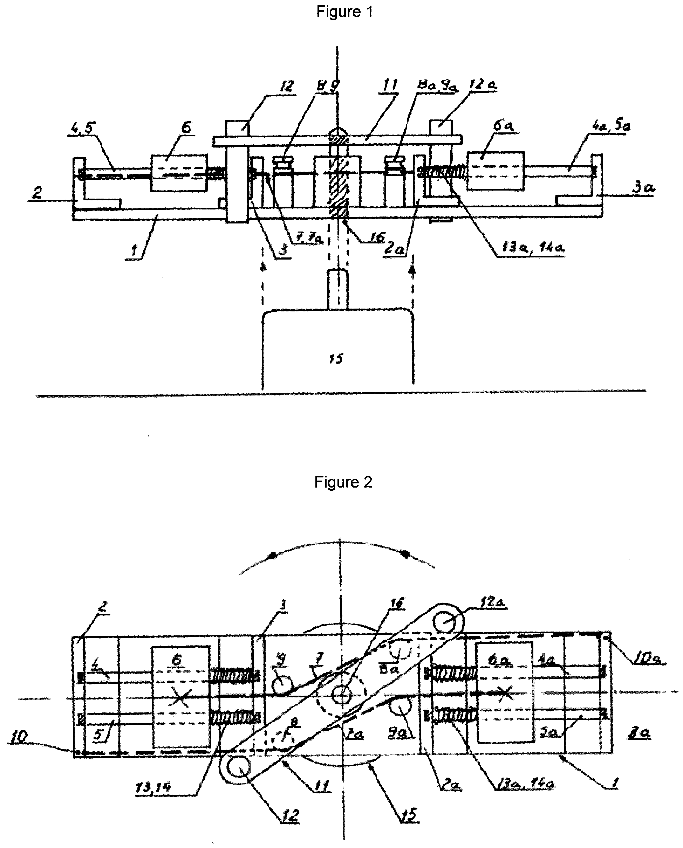

Figures 1 and 2 show a full view of the converter, with the electric motor (15) used in these tests. This converter consists of a platform (1) with radial, diametrically opposing support elements (2, 3, 2a, 3a). Guides (4, 5, 4a, 5a) are arranged between these, and objects (6, 6a) slide along said guides. Each of these objects (6, 6a) has one end of a flexible but inextensible tether (7, 7a) fastened to the centre of mass.

Each tether (7, 7a) rests on pins (8, 9, 8a, 9a) to divert it from the central direction, and then its free end is fastened at a point (10, 10a) on the opposite side of the platform (1). Each tether (7, 7a) must have a length such that the objects (6, 6a) are unable to rest on either of the support elements (2, 3a), so that the force is applied at points (10, 10a) of the platform (1). Positioning springs (13, 14, 13a, 14a) are inserted in the guides (4, 5, 4a, 5a) in the part of these which rests on the support elements (2a, 3).

Power is transmitted towards the outside of the converter by means of a part (11) which rests on the same rotational shaft as the platform (1), but which is not secured thereto. This part (11) bears bolts (12, 12a), which on the platform (1) side are used to limit the angular displacement of the part (11) with respect to the platform (1) and on the opposite side will serve to embed the device to which the results of this converter are to be applied.

None of the figures provide details such as the mass of the objects (6, 6a), the radius of rotation thereof, the position of the pins (8, 9, 8a, 9a), or points (10, 10a) where the tethers (7, 7a) are fastened to the platform (1), given that these are the parameters which determine the gain of this converter, and this depends on the use that is given to it. Although the tests were carried out with an electric motor, the type of machine used to keep the system in operation is not specified either; many different types may be used and the choice will depend on the use that is given to the invention.

## Claims

1. A circular motion-potential energy converter existing in a mechanical system, for using the potential energy which exists in the circular movement of any object, characterised essentially by the means of applying and using said energy, comprising: objects (6, 6a, two in this case; there may be more) which generate the centrifugal force, and which have one end of the laterally but not longitudinally flexible tethers (7, 7a) fastened to their centres of mass, said tethers serving to apply the centrifugal force of the objects (6, 6a) at points (10, 10a) which are different from the centre of rotation of the platform (1). The objects (6, 6a) slide or may slide along guides (4, 5, 4a, 5a), which are embedded between support elements (2, 3, 2a, 3a), the latter in turn being fastened to the platform (1). In the most central part of the guides (4, 5, 4a, 5a) there are springs (13, 14, 13a, 14a) which serve to keep the tethers (7, 7a) taut and which mark the initial position of the objects (6, 6a) when the system is stationary.

2. The circular motion-potential energy converter according to claim 1, which uses supports (pins 8, 9, 8a, 9a) for the tethers (7, 7a) that divert the centrifugal force generated by the objects (6, 6a), so as to apply it through the tethers (7, 7a) at points (10, 10a) which are different from the centre of rotation of the mechanical system, the free end of the tethers (7, 7a) being fastened at two points (10, 10a) which are diametrically opposite and equidistant to the centre of rotation, in a position which, without being crucial, limits the radius of rotation of the objects (6, 6a), thus preventing the objects (6, 6a) from coming to rest on the edge of the platform (1).
